# EUROPEAN PATENT SPECIFICATION

(11) **EP 0 850 135 B1**
(45) Date of publication and mention of the grant of the patent: **25.07.2001**
(21) Application number: 96931792.4
(22) Date of filing: 11.09.1996
(51) Int. Cl.: B29C 51/14, B32B 31/00, B65D 65/40

(54) **METHOD FOR PRODUCING LAMINATED ARTICLES, PARTICULARLY FOR PACKAGING PERISHABLE AND/OR CHEMICALLY AGGRESSIVE SUBSTANCES, AND CONTAINERS PRODUCED WITH SAID METHOD**
VERFAHREN ZUR HERSTELLUNG VON MEHRSCHICHTIGEN GEGENSTÄNDEN,INSBESONDERE FÜR DIE VERPACKUNG VON VERDERBLICHEN UND/ODER CHEMISCH AGRESSIVEN SUBSTANZEN UND DANACH HERGESTELLTER BEHÄLTER
PROCEDE DE FABRICATION D'ARTICLES STRATIFIES, DESTINES EN PARTICULIER A L'EMBALLAGE DE SUBSTANCES PERISSABLES ET/OU CHIMIQUEMENT AGRESSIVES, ET RECIPIENTS AINSI FABRIQUES

(30) Priority: 14.09.1995 IT VI950142
(43) Date of publication of application: 01.07.1998
(73) Proprietor: FEBUS S.r.l., 20121 Milano (IT)
(72) Inventor: Riglietti, Antonio, 36061 Bassano del Grappa (IT)
(74) Representative: O'Byrne, Daniel Joseph
(86) International application number: EP9603994
(87) International publication number: WO9710095

(56) References cited:
- EP-A- 0 150 979
- EP-A- 0 341 044
- WO-A-95/25625
- CH-A- 684 254
- DE-A- 2 462 050
- GB-A- 1 211 178
- GB-A- 1 232 473
- GB-A- 1 330 583
- GB-A- 1 436 875
- GB-A- 1 441 411
- US-A- 3 878 018
- US-A- 4 390 489
- US-A- 4 411 849
- US-A- 4 551 366

## Description

The present invention relates to a method for producing laminated items, for example containers for packaging and storing perishable and/or chemically aggressive substances, such as foods, beverages, drugs, cosmetics, and the like.

A second aspect of the invention relates to laminated or multilayer containers and to the corresponding lids produced with the method.

A container that is ideal for the above mentioned purpose must not contaminate or alter the substances contained therein, must not release or absorb odors and/or tastes, and must also withstand the various operating conditions, be impermeable to liquids and gases, and must be biodegradable or recyclable, aesthetically pleasant, and cheap.

In order to extend the shelf life of perishable substances, the oxygen contained in the air must be prevented from entering the sealed container by diffusion through the walls. Likewise, for perishable substances packaged in a controlled atmosphere, this atmosphere must be prevented from flowing outward.

In general, known single-layer containers made monolithically of plastics and similar materials by injection-molding, thermoforming, blow-molding, extrusion, et cetera, do not have all the characteristics of the ideal container. For example, most of them are hot highly impermeable to oxygen, which by penetrating through the walls of the container can oxidize the contents.

In order to improve conventional packages, known production methods have been perfected for multilayer or laminated containers that are constituted by two or more materials having different and mutually complementary physical and chemical properties. In particular, a conventional method provides for the coupling of the various materials in layers, by virtue of combined injection-molding, blow molding, or coextrusion.

Another conventional method provides for the mixing of two or more materials, for example polyamide (PA) and polyethylene (PET), to form containers for example by thermoforming.

A drawback of conventional container production methods is that the processes that are used can cause a partial loss of some physical and chemical properties of the initial materials, for example. Therefore, the resulting containers may have poor mechanical strength and rigidity and relatively high permeability to gases.

Another drawback of conventional methods is the difficulty in applying decorations and/or labels during forming (so-called "in-mold labeling"). The decoration or the label is in fact often damaged by the water and/or by the high process temperature.

Another drawback is the high cost of the conventional methods for producing containers with relatively thick walls (275 µm to 500 µm) ensuring sufficient impermeability to gases as well.

From EP-A-150 979 a method is known for manufacturing laminated containers embodying all the features of the preamble of the attached claim 1 and obtained by thermoforming of polymer sheets.

From GB-A 1 441 411 a similar manufacturing method is known based on thermoforming of a plurality of sheets of laminater material which are layered in a mold and heated to bond together.

From EP-A-344 044 a method is known for manufacturing a plastic container formed by a laminated sheet bonded to a rigid layer of a large thickness. The rigid layer is extruded outside of the mold before thermoforming.

The aim of the invention is to overcome the above drawbacks by providing a method for producing items, for examples disposable laminated containers for packaging and storing perishable substances, having perfect impermeableness to fluids in the liquid and gaseous state, low cost, strength, recyclability and/or biodegradability.

Another object of the invention is to provide a method for producing containers with intact, functional, and clearly visible labels and decorations.

This aim, this object, and others that will become apparent hereinafter are achieved by a method for producing laminated articles, particularly for packaging and storing perishable and/or chemically aggressive substances, as claimed in the appended claim 1.

The superimposed layers are welded at a relatively low temperature that can vary between 50 °C and 25 °C and at a pressure that can vary between 5x10⁵ Pa and 2x10⁷ Pa.

In this manner, one achieves strong adhesions of the superimposed layers while preserving the chemical and physical properties of the individual materials.

The layers are at least four: a first outer layer, made of a plastic materials that is impermeable to liquids and gases and is optically transparent; a second pigmented layer, which forms a decoration and/or a label; a third layer of laminated thermoplastic material and a fourth layer of granular thermoplastic material. It is also possible to provide, at the innermost face of the article, an additional layer of laminated aluminum, joined to the fourth layer of granular thermoplastic material by a sixth layer of laminated thermoplastic material. The aluminum layer forms a first unidirectional barrier from the inside toward the outside.

The method according to the invention as defined in claim 1 allows to provide items such as multilayer containers with characteristics that significantly increase, with respect to conventional containers, the shelf life of the products contained in the provided containers.

A second aspect of the invention provides for the production of a throwaway multilayer container as defined in claim 9 for the type described in the preamble, including a tray and a lid.

Conveniently, the choice of the materials of the layers allows to perfectly adapt the characteristics of the container to the substances that it is meant to contain, in order to achieve optimum storage thereof.

Further characteristics and advantages will become apparent from the following detailed description of the method and of the container according to the invention, illustrated only by way of non-limitative example in the accompanying drawings, wherein:

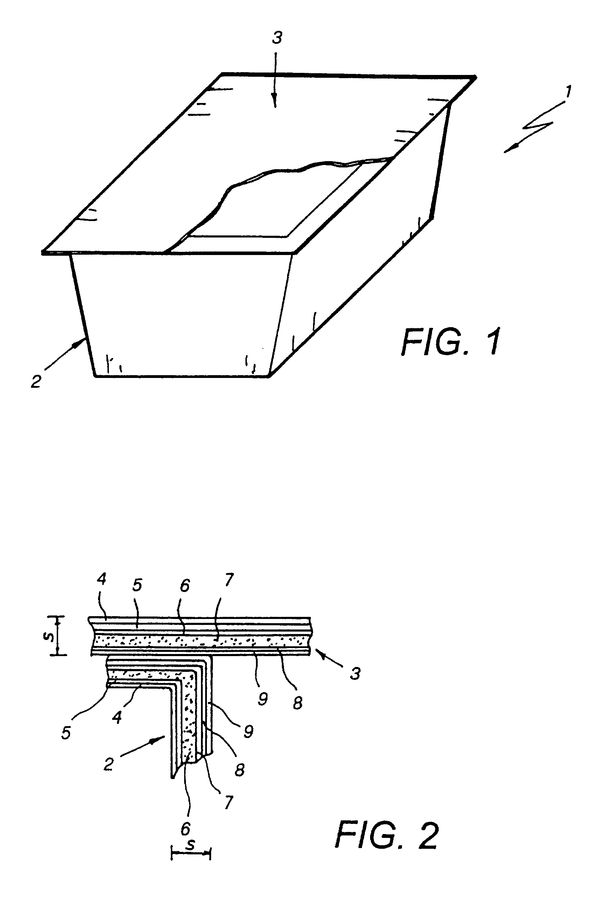

Figure 1 is a perspective view of a multilayer container produced with the method according to the invention;
Figure 2 is an enlarged-scale sectional view of a portion of the container of Figure 1.

With reference to the above figures, the method according to the invention comprises the preparation of a mold that is shaped complementarily with respect to the item to be produced and on which at least two superimposed layers of thermoplastic materials are deposited which have chemical and physical characteristics that provide impermeableness to fluids, mechanical strength, resistance to chemicals, and differentiated transparency to light.

In particular, the materials of the layers can be chosen for example among polyamides (PA), polyolefins (HDPE, LDPE, PP, PE), linear polyester (PET), polyvinyl chloride (PVC), styrene polymers (PS), cellulose esters, polycarbonates (PC), fluoridized polymers, ethylene vinyl acetate.

The preliminarily superimposed layers are then mutually welded along the surfaces that are in contact and by simultaneous heating and compression.

Finally, the resulting item is rapidly cooled by means of a low-temperature fluid which, for example, passes through a cooling circuit that lies inside the mold.

In particular, in each layer, at least one of the above mentioned characteristics of the individual materials is predominant with respect to the others, so as to maximize in the resulting multilayer item, as a whole, all the characteristics of the individual layers.

The welding or adhesion of the superimposed layers is substantially of the autogenous type produced by softening and pressure, and is performed at a relatively low temperature that can generally vary between 40°C and 250°C, with maximum temperatures of approximately 300°C, depending on the polymer that is used, and at pressures that can vary between 3x10⁵ Pa and 3x10⁷ Pa, preferably comprised between 5x10⁵ and 2x10⁷ Pa.

This type of welding produces strong adhesion of the superimposed layers while keeping the chemical and physical properties of the materials of each individual layer substantially intact.

The method according to the invention includes the superimposition of at least four layers of material: a first outermost layer of a plastic material that is impermeable to liquids and gases and is optically transparent; a second pigmented layer that forms a decoration and/or a label; a third layer of laminated thermoplastic material; and a fourth layer of granular thermoplastic material.

The fourth layer tends to melt during welding, permanently assuming the shape of the mold. Subsequent rapid cooling causes considerable hardening of all the thermoplastic layers, which mutually cooperate to increase the overall mechanical strength of the container.

It is also possible to superimpose a further fifth layer on the fourth layer. The fifth layer is constituted by a sheet of laminated aluminum that is arranged on the innermost face of the container and is made to adhere to the fourth layer by means of a sixth layer of thermoplastic material.

The aluminum sheet constitutes an effective barrier against any escape of fluids from the inside of the container toward the outside.

A second aspect of the invention relates to a container produced with the above described method.

The container, generally designated by the reference numeral 1, includes a tray 2 and a lid 3.

In the embodiment shown in the figures, the container has a rectangular base and has a reduced size, but the shape and the dimensions may be any according to the specific requirements without thereby abandoning the scope of the invention.

For example, the resulting container can have walls having a total thickness s of approximately 870 *µ*m and can be constituted by: a first outer layer 4 made of transparent nylon ^{(R)}, with a thickness of approximately 15 *µ*m and a density of approximately 1.3 kg/cm³; a second layer 5 of an ink or pigmented product that is suitable to form a label, a decoration or an ornament and is approximately 5 *µ*m thick; a third layer 6 of polypropylene that is approximately 75 *µ*m thick and has a density of approximately 0.92 kg/cm³; a fourth layer 7 of polypropylene that is approximately 750 *µ*m thick and has the same density as the second layer; a fifth layer 8, which is constituted by a sheet of laminated aluminum 5 to 20 *µ*m thick and suitable to form a unidirectional barrier from the inside toward the outside of the container; and a sixth layer 9 of thermoplastic material that is approximately 20 *µ*m thick and is suitable to fix the aluminum layer 8 to the underlying layers.

The resulting container is very strong and rigid, has very low bidirectional permeability to fluids, does not contaminate the contents in any way, and is ecological and recyclable. All these characteristics are obtained with lower costs than those of conventional containers having the same characteristics.

The layer of pigmented material that forms the label or a decoration of the container introduced in the mold is protected by the outer layer and is not damaged in any way during the production process and during subsequent use; therefore both the inscriptions and the decorations are sharp and clearly visible from outside.

Experimental tests conducted at the laboratories of the University of Salerno, Department of Chemical and Food Engineering, to measure permeability to oxygen, nitrogen, and carbon dioxide gases have shown that the multilayer material of the containers obtained with the method according to the invention has, under equal test conditions, a permeability that is distinctly lower than that of the materials commonly used to produce similar containers.

These tests were conducted with a GPM 200 permeability gauge made by Lyssy, Zollkon (Switzerland) on uniform samples, according to the ASTM D 1434 testing specification (25°C - 0% RH).

The samples of material were constituted by strips approximately 0.8 mm thick and of a size that was adequate for the permeability measurements; these measurements were performed in a circular cell measuring 100 mm in diameter and the strips were obtained from food packaging trays.

The specimens to be subjected to the permeability test were cut from the strips. Only one specimen was obtained for each material due to the presence, in the strip, of the residue of the molding sprue, which as a matter of precaution was excluded from the specimens to ensure the absence of microfissures.

Each specimen was conditioned for eight hours in a vacuum oven at 40°C before each test. The permeability values listed hereafter were averaged on the basis of at least three findings.

The results of the above tests are listed in the following Table 1.

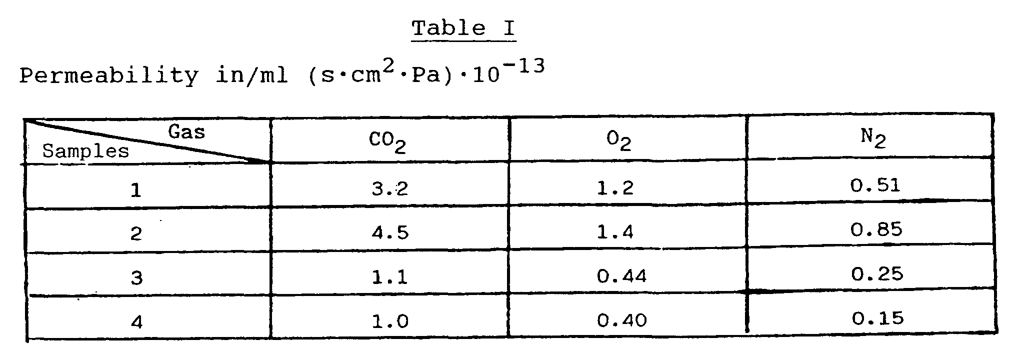

In particular, samples 1 and 2 are taken from commonly commercially available containers made of molded plastic. In particular, sample 1 is formed by a multilayer item composed of two coupled layers of PP, with a decorative ink interposed, and of a third layer of granular PP. Sample 2 is constituted by a single layer of PP without coverings that is simply molded. Samples 3 and 4 are obtained from containers produced with the method according to the invention.

The method according to the invention and the items obtained with the method are susceptible of numerous modifications and variations, all of which are within the scope of the inventive concept expressed by the accompanying claims.

The shapes and the dimensions of the containers can vary according to the requirements.

## Claims

1. A method for producing laminated articles, particularly for packaging and storing perishable and/or chemically aggressive substances, characterized by the following steps:
a) preparing a mold that is shaped complementarily to the item to be produced;
b) depositing, at least four superimposed layers of thermoplastic materials, in said mold, having chemical and physical characteristics that provide impermeableness to fluids, mechanical strength, resistance to chemicals, and different transparency to light, wherein at least one of said characteristics is predominant with respect to the others in each one of said layers;
c) welding said superimposed layers, on the surfaces that are mutually in contact, by simultaneous heating and compression;
d) rapid cooling of the resulting article;
wherein said at least four layers comprise a first outer layer, made of a thermoplastic material that is impermeable to liquids and gases and is optically transparent; a second pigmented layer, which forms a decoration and/or a label; a third layer of laminated thermoplastic material; and a fourth layer of granular thermoplastic material, and wherein said rapid cooling in step d) occurs by a cooling means that acts on said mold.

2. The method according to claim 1, characterized in that it comprises a fifth layer, on the innermost face of the item, said fifth layer being of laminar aluminium and being joined to said fourth layer of thermoplastic material by a sixth layer of laminated thermoplastic material, wherein said aluminum layer forms a unidirectional barrier from the inside toward the outside.

3. The method according to one or more of the preceding claims, characterized in that said layer of granular thermoplastic material is distinctly thicker than the others in order to provide a supporting structure of said container.

4. The method according to claim 1, characterized in that said bonding of said step c) occurs at a relatively low temperature between 40 °C and 300 °C and at a pressure that can very between 3x10⁵ Pa and 3x10⁷ Pa.

5. The method according to claim 1, characterized in that cooling of step d) is performed by circulating in the mold a cooling medium at low temperature with a holding item of approximately 4 seconds.

6. The method according to claim 1, characterized in that the heating of said superimposed layers during step c) occurs indirectly or directly by means of an adapted pre-heater by conduction through said mold.

7. Method according to claim 1, characterized in that said compression of step c) is performed by a mechanical and/or hydraulic and/or pneumatic means according to a present criterion.

8. Method according to one or more of the preceding claims. characterized in that said layer of thermoplastic material are chosen among polyamides (PA). polyolefins (HDPE, LDPE, PP, PE), linear polyester (PET), polyvinyl chloride (PVC), styrene polymers (PS) cellulose esters, polycarbonates (PC), flouridized polymers, ethylene vinyl acetate.

9. Disposable laminated container, particularly for packaging and storing perishable and/or chemically aggressive substances, obtainable by the method according to the preceding claims, said container comprising a tray (2) and a lid (3) and being formed by at least four superimposed layers of thermoplastic materials having chemical and physical characteristics that provide impermeableness to fluids, mechanical strength, resistance to chemicals, and different transparency to light, wherein at least one of said characteristics is predominant with respect to the others in each one of said layers, said superimposed layers being welded on the surfaces thereof that are mutually in contact, characterized in that said at least four layers comprise a first outer layer, made of a thermoplastic material that is impermeable to liquids and gases and is optically transparent, a second pigmented layer, which forms a decoration and/or a label, a third layer of laminated thermoplastic material and a fourth layer of granular thermoplastic material.

## Patentansprüche

1. Verfahren zur Herstellung von mehrschichtigen Gegenständen, insbesondere für die Verpackung und Lagerung von verderblichen und/oder chemisch aggresiven Substanzen, gekennzeichnet durch,
a) Vorbereiten einer Form, die komplementär geformt ist zu dem herzustellenden Gegenstand,
b) Einlegen in diese Form von mindestens vier über einander liegenden Schichten aus thermoplastischen Materialien mit chemischen und physikalischen Eigenschaften, die Undurchlässigkeit gegenüber Flüssigkeiten, mechanische Festigkeit, Widerstandsfähigkeit gegen Chemikalien und unterschiedliche Durchlässigkeit für Licht aufweisen, wobei mindestens eine dieser Eigenschaften gegenüber den anderen in jeder dieser Schichten überwiegt,
c) Schweißen dieser über einander liegenden Schichten auf den Oberflächen, die gegenseitig mit einander in Kontakt sind durch gleichzeitiges Heizen und Komprimieren,
d) Schnelles Abkühlen der hergestellten Gegenstände, wobei diese mindestens vier Schichten eine erste äußere Schicht umfassen aus thermoplastischem Material, das undurchlässig gegenüber Flüssigkeiten und Gasen und optisch transparent ist, einer zweiten pigmentierten Schicht, die eine Dekoration und/oder eine Kennung darstellt, einer dritten Schicht aus laminiertem thermoplastischem Material, und einer vierten Schicht aus granularem, thermoplastischem Material, und wobei die schnelle Abkühlung aus Schritt d) mit einem Kühlmittel erfolgt, das auf die Form wirkt.

2. Verfahren gemäß Anspruch 1, dadurch gekennzeichnet, daß es eine fünfte Schicht umfaßt auf der inneren Fläche des Gegenstands, wobei diese fünfte Schicht aus laminarem Aluminium besteht und mit der vierten Schicht aus thermoplastischem Material verbunden ist mittels einer sechsten Schicht aus laminiertem, thermoplastischem Material, wobei die Schicht aus Aluminium eine Sperre bildet, die in eine Richtung von innen nach außen wirkt.

3. Verfahren gemäß einem oder mehreren der vorhergehenden Ansprüche, dadurch gekennzeichnet, daß die Schicht aus granularem thermoplastischem Material deutlich dicker ist als die anderen, um eine tragende Struktur dieses Behälters zu bewirken.

4. Verfahren gemäß Anspruch 1, dadurch gekennzeichnet, daß das zusammen Fügen aus Schritt c) bei einer relativ niedrigen Temperatur zwischen 40° C und 300° C erfolgt und bei einem Druck, der variieren kann zwischen 3x10⁵ Pa und 3x10⁷ Pa.

5. Verfahren gemäß Anspruch 1, dadurch gekennzeichnet, daß das Kühlen aus Schritt d) erfolgt indem ein Kühlmedium bei niedriger Temperatur für ungefähr 4 sek. durch die Form geleitet wird.

6. Verfahren gemäß Anspruch 1, dadurch gekennzeichnet, daß das Erhitzen der über einander liegenden Schichten während Schritt c) indirekt oder direkt erfolgt mit einem angepaßten Vorerhitzer mittels Leitung durch die Form.

7. Verfahren gemäß Anspruch 1, dadurch gekennzeichnet, daß die Kompression aus Schritt c) mittels einer mechanischen und/oder hydraulischen und/oder pneumatischen Einrichtung nach einem vorgegebenen Kriterium erfolgt.

8. Verfahren gemäß einem oder mehreren der vorhergehenden Ansprüche, dadurch gekennzeichnet, daß die Schicht aus thermoplastischem Material ausgewählt ist aus Polyamiden (PA), Polyolefinen (HDPE, LDPE, PP, PE), linearen Polyestern (PET), Polyvinylchlorid (PVC), styrenen Polymeren (PS), Zelluloseestern, Polycarbonaten (PC), fluorisierten Polymeren, Ethylenvinylacetat.

9. Laminierter Behälter, insbesondere für die Verpackung und Lagerung von verderblichen und/oder chemisch aggresiven Substanzen, der erhalten wird durch ein Verfahren gemäß den vorhergehenden Ansprüchen, wobei dieser Behälter eine Schale (2) und einen Deckel (3) umfaßt und gebildet ist aus mindestens vier über einander liegenden Schichten aus thermoplastischen Materialien mit chemischen und physikalischen Eigenschaften, die Undurchlässigkeit gegenüber Flüssigkeiten, mechanische Festigkeit, Widerstandsfähigkeit gegen Chemikalien und unterschiedliche Durchlässigkeit für Licht aufweisen, wobei mindestens eine dieser Eigenschaften gegenüber den anderen in jeder dieser Schichten überwiegt, diese über einander liegenden Schichten auf den Oberflächen verschweißt sind, die gegenseitig mit einander in Kontakt sind,
**dadurch gekennzeichnet, daß** diese mindestens vier Schichten eine erste äußere Schicht aus thermoplastischem Material, das undurchlässig gegenüber Flüssigkeiten und Gasen und optisch transparent ist, eine zweite pigmentierte Schicht, die eine Dekoration und/oder eine Kennung darstellt, eine dritte Schicht aus laminiertem thermoplastischem Material, und eine vierte Schicht aus granularem, thermoplastischem Material umfassen.

## Revendications

1. Procédé pour produire des articles stratifiés, particulièrement pour l'emballage et le stockage de substances périssables et/ou chimiquement agressives, caractérisé par les étapes suivantes :
a) préparer un moule qui est de forme complémentaire de l'article à produire ;
b) déposer dans ledit moule au moins quatre couches superposées de matières thermoplastiques ayant des caractéristiques chimiques et physiques qui donnent de l'imperméabilité aux fluides, de la résistance mécanique, de la résistance aux produits chimiques et différentes transparences à la lumière, dans lequel au moins une desdites caractéristiques est prédominante par rapport aux autres dans chacune desdites couches ;
c) souder lesdites couches superposées sur les surfaces qui sont mutuellement en contact, par chauffage et compression simultanés ;
d) refroidir rapidement l'article résultant ;
dans lequel lesdites au moins quatre couches comprennent une première couche extérieure, faite d'une matière thermoplastique qui est imperméable aux liquides et aux gaz et qui est optiquement transparente ; une deuxième couche pigmentée, qui forme une décoration et/ou une étiquette ; une troisième couche de matière thermoplastique stratifiée ; et une quatrième couche de matière thermoplastique granulaire, et dans lequel ledit refroidissement rapide de l'étape d) est produit par des moyens de refroidissement qui agissent sur ledit moule.

2. Procédé selon la revendication 1 caractérisé en ce qu'il comprend une cinquième couche, sur la face extrême intérieure de l'article, ladite cinquième couche éteint faite d'aluminium laminaire et étant réunie à la quatrième couche de matière thermoplastique par une sixième couche de matière thermoplastique stratifiée, dans lequel ladite couche d'aluminium forme une barrière unidirectionnelle agissant de l'intérieur vers l'extérieur.

3. Procédé selon une ou plusieurs des revendications précédentes, caractérisé en ce que ladite couche de matière thermoplastique granulaire est nettement plus épaisse que les autres afin de constituer une structure de support dudit récipient.

4. Procédé selon la revendication 1, caractérisé en ce que ledit assemblage de l'étape c) se produit à une température relativement basse comprise entre 40°C et 300°C et à une pression qui peut varier entre 3 x 10⁵ Pa et 3 x 10⁷ Pa.

5. Procédé selon la revendication 1, caractérisé en ce que le refroidissement de l'étape d) est exécuté en faisant circuler dans le moule un milieu de refroidissement à basse température, avec un temps de maintien d'environ 4 secondes.

6. Procédé selon la revendication 1, caractérisé en ce que le chauffage desdites couches superposées pendant l'étape c) se produit indirectement ou directement au moyen d'un préchauffeur adapté, par conduction à travers ledit moule.

7. Procédé selon la revendication 1, caractérisé en ce que ladite compression de l'étape c) est exécutée par des moyens mécaniques et/ou hydrauliques et/ou pneumatiques selon un présent critère.

8. Procédé selon une ou plusieurs des revendications précédentes, caractérisé en ce que lesdites couches de matière thermoplastique sont choisies parmi : polyamides (Pa), polyoléfines (HDPE, LDPE, PP, PE), polyester linéaire (PET), polychlorure de vinyle (PVC), polymères de styrène (PS), esters de cellulose, polycarbonates (PC), polymères fluorés, éthylène acétate de vinyle.

9. Récipient stratifié jetable, en particulier pour l'emballage et le stockage de substances périssables et/ou chimiquement agressives, pouvant être obtenu par le procédé selon les revendications précédentes, ledit récipient comprenant un bac (2) et un couvercle (3) et étant formé d'au moins quatre couches superposées de matières thermoplastiques ayant des caractéristiques chimiques et physiques qui donnent de l'imperméabilité aux fluides, de la résistance mécanique, de la résistance aux produits chimiques et différentes transparences à la lumière, dans lequel au moins une desdites caractéristiques est prédominante par rapport aux autres dans chacune desdites couches, lesdites couches superposées étant soudées sur leurs surfaces qui sont mutuellement en contact, caractérisé en ce que lesdites au moins quatre couches comprennent une première couche extérieure, faite d'une matière thermoplastique qui est imperméable aux liquides et aux gaz et qui est optiquement transparente ; une deuxième couche pigmentée, qui forme une décoration et/ou une étiquette ; une troisième couche de matière thermoplastique stratifiée ; et une quatrième couche de matière thermoplastique granulaire.
